# EUROPEAN PATENT SPECIFICATION

(11) **EP 3 379 924 B1**
(45) Date of publication and mention of the grant of the patent: **06.11.2024**
(21) Application number: 16837981.6
(22) Date of filing: 23.11.2016
(51) Int. Cl.: A01G 24/30, A01G 24/42, A01G 24/44

(54) **A PLANT GROWING MEDIUM BASED ON POLYVINYL FORMAL (PVFO) AND A METHOD FOR THE PREPARATION THEREOF**
PFLANZENWACHSTUMSMEDIUM AUF DER BASIS VON POLYVINYLFORMAL (PVFO) UND VERFAHREN ZUR HERSTELLUNG DAVON
MILIEU DE CROISSANCE VÉGÉTALE À BASE DE POLY(FORMAL DE VINYLE) (PVFM) ET PROCÉDÉ POUR LE PRÉPARER

(30) Priority: 23.11.2015 EE 201500033
(43) Date of publication of application: 03.10.2018
(73) Proprietor: Post, Priit, 74011 Viimsi (EE); Peterson, Rene, 10312 Tallinn (EE); Sabiin, Heino, 88208 Pärnu maakond (EE)
(72) Inventor: Post, Priit, 74011 Viimsi (EE); Peterson, Rene, 10312 Tallinn (EE); Sabiin, Heino, 88208 Pärnu maakond (EE)
(74) Representative: AAA Patendibüroo OÜ
(86) International application number: PCT/IB2016/057070
(87) International publication number: WO 2017/089972

(56) References cited:
- EP-A1- 3 087 828
- JP-A- 2014 143 931

## Description

### Field of the invention

This invention belongs to the field of plant cultivation, more specifically, the invention is an environmentally friendly plant cultivation medium used in hydroponics. The invention is a plant growing medium based on polyvinyl formal (PVFO) and a method for the preparation of this medium.

### Prior art

Effectively organised, well-systematised, modern plant cultivation, controlled in the most precise manner possible, largely depends on the materials used, such as plant growing media, fertilisers, and water - this applies to plant cultivation in large-scale production as well as landscape gardening and hobby gardening.

Top-quality plant growing media enable the grower to manage the quantity and distribution of water given to plants in an environment very precisely. This ensures a more balanced and managed availability of fertilisers and nutrients for cultivated plants, facilitating an effective oversight and management of plant growing processes. An efficient and managed plant growing process is especially important for mass producers. In mass production, both the quality and quantity of the produce depend on it. In addition to the quality of produce, the use of appropriate growing media helps optimise the use of fertilisers and water. In landscape gardening and hobby gardening, it is important to keep the humidity regime as even as possible irrespective of regular or irregular watering. Materials used in hydroponics which are based on rock wool, peat, various natural or synthetic polymer fibres or foams are known from the state of the art. Mainly synthetic materials are used in hydroponics. Natural fibre materials (coir, for example) and peat are used to a lesser extent. Most materials used in hydroponics are meant for single use, as they decompose or get contaminated with materials of plant origin or microorganisms. The materials used in hydroponics known from the state of the art are poorly recyclable after use or essentially not recyclable at all like rock wool, which is not biodegradable or burnable.

A weakness of rock wool is the lack of options for its reuse and the great complexity of recycling it after use. Despite the fact that rock wool poses no direct threat in nature by itself, it does not decompose and lacks alternative applications of use after its use in plant cultivation. Rock wool is simply sent to the scrap heap. After use as a plant cultivation environment, rock wool is full of plant roots, which are hard to remove, and may potentially be a carrier of plant diseases or pests. Rock wool should essentially be remelted and reprocessed into fibre so that it could be reused.

Poor water absorption capacity is a weakness of coir or other plant fibres, although these provide excellent support for plant roots and ensure aeration. Furthermore, coir as a material is expensive. Peat is problematic due to its low pH, which is not suitable for use with many plants. In addition, the inconvenience of handling peat is also an issue: when dry, peat is very light and dust-like; when wet, it leaves stains. Peat is perfect for use in outdoor conditions with regular soil and/or compost. The use of peat in hydroponics tends to cause problems, and industrial plant growers (such as cucumber and tomato farms) do not consider peat to be a good material. One problem that both peat and plant fibres have is that it is difficult to sterilise them and there is a danger that they already carry a plant disease.

Plant cultivation substrata that contain polyvinyl formal, and media whose advantage is that their material can at least partially be recycled are known from the state of the art.

Chinese utility model no. CN2273108 discloses a plant cultivation substratum which contains polyvinyl formal as a component, and Chinese patent application no. CN103907486 discloses a planting pot made of polyvinyl formal.

An artificial medium used in hydroponics and consisting of polyester fibres and porous, synthetic fibres is disclosed in Japanese patent application no. JPH02177830.

A textile used in hydroponics whose outer layer is covered with a part of polyvinyl alcohol that partly decomposes biologically is disclosed in Japanese patent application no. JP2005124445.

A hydrogel made of polyvinyl alcohol and polyamine compounds which is used as artificial soil in hydroponics is disclosed in Japanese patent application no. JPH04334539.

JP2014143931 A discloses a plant-growing medium consisting of granules of shredded polyvinyl acetal resin porous body, especially polyvinyl formal. The granules are used in mixed soil with other natural raw materials, maintaining the form of soil.

However, the materials known from the state of the art are not fully recyclable and are difficult to handle; in places, such materials are hard for plant roots to penetrate. In addition, the materials known from the state of the art lack sufficient aeration.

### Summary of the invention

This invention relates to a plant growing medium that is based on polyvinyl formal (PVFO) and consists of granules, which is used purely as a separate plant growing medium. Not falling within the subject-matter for which protection is sought is the plant growing medium that is based on polyvinyl formal and consists of granules that can be added to existing plant growing media.

The plant growing medium of this invention contains sets of granules which are made of porous polyvinyl formal and self-compost in the course of time; the granules are glued together, for example by means of polyvinyl alcohol.

The PVFO material disclosed with the invention:
- is ecologically safe;
- does not require recycling, the material either remains in the surface (is used in the planting of greenery over large areas, for example) or is reused after cleaning;
- can be enriched with substances necessary for the growth or management of plants, such as fertilisers.

The granules of this PVFO material are synthesised on the basis of polyvinyl alcohol or polyvinyl acetate, formaldehyde or paraformaldehyde and a filler based on polysaccharides, such as different starches, agar, etc., after which the PVFO material is cut into granules, fertilisers are added; and the granules are glued together.

### List of drawings

The preferred embodiments of the invention are described with reference to the accompanying figures. The following is depicted in the figures:
Fig. 1 depicts the cross-linking of polymer chains.
Fig. 2 is an image of porous polyvinyl formal taken with an electron microscope at 50× magnification.
Fig. 3 is an image of porous polyvinyl formal taken with an electron microscope at 150× magnification.

### An example embodiment of the invention

The invention is a plant growing medium based on polyvinyl formal (PVFO) which contains granules that are glued together.

Polyvinyl formal is chemically stable (it is only sensitive to acidic environments) and biologically neutral. At the same time, it can be decomposed by microorganisms in a few years. Regarding its chemical composition, polyvinyl formal is an acetal of polyvinyl alcohol created by condensing polyvinyl alcohol in an acidic environment (the H⁺ ion catalyses the reaction). Polyvinyl formal as a monomeric unit has the following formula: 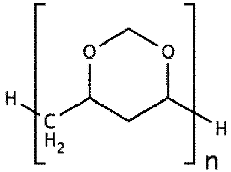 where 'n' shows the number of monomeric units in the polymer chain.

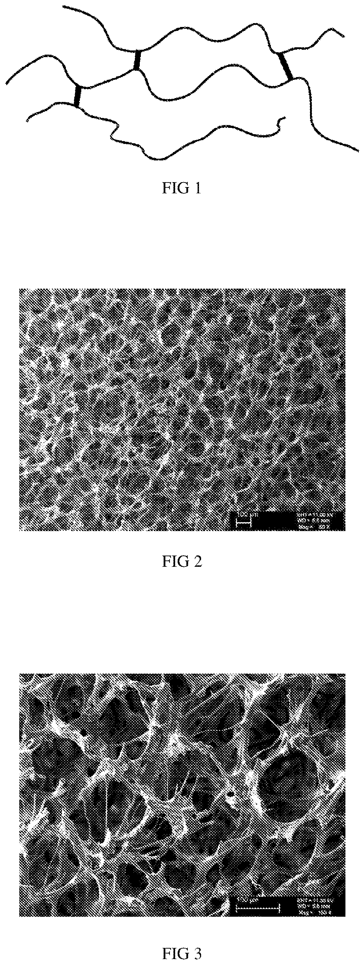

In addition to acetalisation, cross-linking between the acetalised polyvinyl alcohol chains (polyvinyl formal is created) is another result of polyvinyl alcohol reacting with formaldehyde. The principle of cross-linking is depicted in Fig. 2, where the longer, sinuous lines represent the polymer chains and the shorter, thicker lines represent the interconnection, or cross-linkage, of the polymer chains. This cross-linkage ensures that a stable, three-dimensional structure is created and chemical and biological stability is maintained. Polyvinyl formal is hydrophilic in essence, but its hydrophilicy is not as strong as that of pure polyvinyl alcohol. Thanks to its hydrophilicy and three-dimensional, cross-linked structure, polyvinyl formal is capable of accumulating water. At the same time, it is insoluble in water, as polyvinyl merely swells up. Its lower hydrophilicy compared to pure polyvinyl alcohol ensures that the water 'trapped' in polyvinyl formal is still easily emitted from it, making it available for plants, for example.

This plant-growing medium of polyvinyl formal must be porous as filler to have better water absorption and volumetric capacity. The dimensions of the pores must be larger than 5 µm, optimally 100-500 µm as shown in Figures 2 and 3, which represent images of porous polyvinyl formal taken with an electron microscope at 50× and 150× magnification. Porous polyvinyl formal is obtained with the help of excipients and fillers that are added to it in the process of its synthesis.

Polyvinyl formal material is produced from polyvinyl alcohol, formaldehyde and a polysaccharide (this polysaccharide can be starch, preferably potato starch, agar, carrageenan or chitin) using the following steps:
1) PVOH solution + polysaccharide suspension at 70 °C
2) Mixing
3) Cooling to 40 °C
4) Addition and mixing of formaldehyde
5) Cooling to 30 °C
6) Addition and mixing of sulphuric acid (the catalyst)
7) Pouring into forms
8) Thermal treatment (in a thermal cabinet or oven) at 55-80 °C (depending on the thickness/volume of the material in the form)
9) Washing

### Description of the synthesis of porous polyvinyl formal and the production of granules

The synthesis is based on polyvinyl alcohol. At the start of the process, a 15% aqueous solution is prepared from polyvinyl alcohol. A filler, which is either a solid or a gaseous filler, is added to the aqueous solution. The aqueous solution of polyvinyl alcohol and the solid filler are mixed and the mixture is cooled to 40 °C. In a preferred embodiment, 37% aqueous formaldehyde solution is used and added at 35-65 °C, in a preferred embodiment at 40 °C. 1.1 moles of formaldehyde per one calculated mole of vinyl alcohol (polyvinyl alcohol monomeric unit) is added to the cooled mixture. After the addition of aqueous formaldehyde solution, the mixture is cooled to 30 °C by constantly stirring it, and an acidic catalyst is added (the H+ ion is the catalyst). A gaseous filler is added together with an acidic catalyst by means of a mixer (by churning) or by purging (bubbling) with gas. A random, appropriate, strong acid, such as sulphuric acid or hydrochloric acid, is used as a catalyst. The acid used as the catalyst must be added to the mix until the pH of the mixture is 0.4.

Pores are caused by the solid filler, which is added to the aqueous polyvinyl alcohol solution during the initial step at 60-75 °C as described above, in a preferred embodiment at 70 °C. Polysaccharides, such as starches, including potato and corn starch, the polysaccharides of algae, including agar, carrageenan, various salts, such as calcium sulphate, sodium aluminium sulphate, etc. are solid fillers that are suitable for creating pores.

In the case that these pores are created by means of a gaseous filler, the filler is added at a later stage and at a lower temperature, such as 30 °C together with a catalyst. Air, nitrogen, carbon dioxide, argon, SF₆, propane, etc. are suitable gases to act as fillers. The addition of this gaseous filler is performed by either frothing or bubbling.

In the case that a gaseous filler (as a means of creating pores) is used, it is added to the reaction mix along with a catalyst, for example by bubbling or churning.

After the addition of a catalyst, the reaction mix is mixed for another half a minute or minute and then poured into special closeable forms. After the reaction mix is poured into the forms, the forms are closed.

The closeable forms are placed in a thermal cabinet or pre-heated oven the temperature of which is 40-100 °C, optimally 70 °C. An acetalisation reaction takes place in the forms, during which polyvinyl alcohol and formaldehyde react with each other to produce a volumetric material of polyvinyl formal.

The acetalisation time in the forms depends on the thickness of the layer of the material and is 1-50 hours (optimally 8 hours) long. After a fixed time, eight hours, for example, the forms are opened and solid volumetric material of polyvinyl formal is taken out of them. This volumetric material of polyvinyl formal is cleaned of any non-reacted chemicals and filler material to free the pores by cleaning.

After cleaning, the produced volumetric material of polyvinyl formal is cut into appropriate pieces, or granules.

Polyvinyl formal granules is produced as a result. The dimensions of the granules are 3-30 mm.

A drying stage precedes or follows the cutting process.

The closeable forms are left unheated to prepare granules of the volumetric material of polyvinyl formal without the cutting stage. The reaction mix is instead pressed through a perforated plate at an appropriate pressure (0.1-20 bars) right after the catalyst is added. The size of the beads depends on the amount of pressure and the dimensions of the holes in the plate. Beads of the material of polyvinyl formal are created as it passes through the perforated plate. The beads are thermally treated at 40-120 °C, optimally at 70-80 °C, as a result of which granules of polyvinyl formal are produced. After the volumetric material of polyvinyl is cut or dried, the granules of polyvinyl formal are enriched with substances that are necessary for the growth of plants, namely with nitrogen, phosphorus and potassium (NPK) compounds (see below). Alternatively, trace elements (such as copper) or substances controlling plant growth are also added after the addition of a mixture of NPK, if necessary.

Not falling within the subject-matter for which protection is soughtthis granular or powdered plant-growing medium is suitable for mixing it into other plant growing media (such as peat).

### Use of volumetric material of polyvinyl formal not falling within the subject-matter for which protection is sought

Volumetric material of polyvinyl formal, which is a compact, lump material (with large lumps), can also be used as a plant-growing medium. Volumetric material of polyvinyl formal that is used as a plant growing medium is obtained as a direct result of synthesising polyvinyl formal without significant subsequent mechanical processing (e.g. cutting).

This volumetric material of polyvinyl formal has a specific shape when it is in the form of pieces, for example plates, cubes, cylinders or other objects with vague shapes, which depend on the shape of the closable form. The volume of the pieces of the volumetric material of polyvinyl formal is larger than 14 cm³. This volumetric material of polyvinyl formal is intended for use as an independent plant growing medium through which plants are supplied with the necessary substances and water that is necessary for their growth. Plants grow without other substrata in this volumetric material of polyvinyl formal. Generally, the plant-growing medium of this volumetric material of polyvinyl formal is designed for growing plants directly from the seed, but it is also suitable for nursery plants.

### Impregnation of the material with fertilisers and/or substances that affect plant growth

A mix of nitrogen, phosphorus and potassium fertiliser (or NPK) or the respective fertilisers separately are used as fertilisers. The impregnation with fertilisers takes place during the last stage of producing the polyvinyl formal material. After the cleaning process which follows the synthesis, the material is sent through a rinsing container as the last stage. The container contains water that has been enriched with a NPK fertiliser mix. After the material is rinsed in the NPK fertiliser mix, any excess water and/or nutrient solution is removed from the material by centrifugation or pressing, and the material is dried if necessary.

### Gluing of granules

The granules are glued to each other after the material has been enriched with a fertiliser mix, and an aqueous solution/suspension of PVOH (polyvinyl alcohol), PVA (polyvinyl acetate) or a mix of PVOH/PVA is used as the glue (hereinafter the 'glue solution'). The glue solution contains small amounts of substances that facilitate the cross-linkage of PVOH molecules. For example, it contains borax or a silicate of some alkaline metal, preferably sodium silicate, which ensures the creation of a more stable glue mix that is still slowly dissolved by water.

When the granules are glued to each other to form a compact structure, they are sprinkled with a 1-10% solution of PVOH or PVOH and PVA. In a preferred embodiment, a 4% solution is used. The solution (PVOH or PVOH and PVA) that is used to sprinkle the granules makes up 5-10% of the volume of the granules. If the granules are sprinkled with a borax or sodium silicate solution, the amount used is 2-5% of the volume of the granules.

In the case that a mix of PVOH and PVA is used, the PVOH content is at least 5%, preferably over 50%. If the granules are glued together, they need not be pre-dried. After the granules are treated with a PVOH (or PVOH + PVA) solution, the granules are spread as an even, 2-3 cm thick (if a plate is prepared) layer which is or placed in a form (to prepare a set of granules that have a specific shape) and sprinkled with a 1-20%, preferably 4%, borax or sodium silicate solution, more preferably with a solution of sodium silicate. Borax or sodium silicate together with PVOH form an elastic glue material that maintains an elastic connection between the granules, ensuring that there is air between the granules, which helps plant roots develop better.

Material that is glued together from granules, such as a cultivation substratum, has several advantages over material which has been prepared as monolithic blocks. Cultivation substrata and other products that are produced of glued material help plant roots grow better, at the same time ensuring better aeration.

## Claims

1. A plant-growing medium based on polyvinyl formal granules, **characterised in that** the polyvinyl formal granules are glued together as a set.

2. A method of preparing a plant-growing medium that is based on polyvinyl formal, **characterised in that** the reaction mix of a polyvinyl alcohol and formaldehyde is acetalized in heated forms, a filler is added, and the obtained volumetric material of polyvinyl formal is cut into granules under pressure, treated thermally, and fertilisers, trace elements, and additives are added, and thereafter the granules are glued together.

3. A method of preparing a plant growing medium according to claim 2, **characterised in that** the reaction mix of polyvinyl alcohol and formaldehyde is pressed through a perforated plate at 0.1-20 bar and the beads of polyvinyl formal thus produced are treated thermally at 40-120 °C to produce granules.

4. A method of preparing a plant growing medium according to claim 3, **characterised in that** the beads of polyvinyl formal are treated thermally at 70-80 °C.

5. A method of preparing a plant-growing medium according to claims 2-4, **characterised in that** the granules are enriched with fertilisers by impregnation.

6. A method of preparing a plant growing medium according to claim 5, **characterised in that** the fertilisers are nitrogen, potassium and phosphorus fertilisers.

7. A method of preparing a plant-growing medium according to claims 2-6, **characterised in that** the granules are enriched with trace elements by impregnation.

8. A method of preparing a plant-growing medium according to claims 2-7, **characterised in that** the granules are glued together by means of an adhesive after they are enriched with a fertiliser mix.

9. A method of preparing a plant growing medium according to claim 8, **characterised in that** the adhesive is an aqueous solution of polyvinyl alcohol.

10. A method of preparing a plant growing medium according to claim 8, **characterised in that** the adhesive is an aqueous solution of polyvinyl acetate.

11. A method of preparing a plant growing medium according to claim 8, **characterised in that** the adhesive is an aqueous solution of a mix of polyvinyl alcohol and polyvinyl acetate.

12. A method of preparing a plant-growing medium according to claims 8 and 11, **characterised in that** the polyvinyl alcohol content in the aqueous solution of a mix of polyvinyl alcohol and polyvinyl acetate is at least 5-50%.

13. A method of preparing a plant-growing medium according to claims 8-12, **characterised in that** the adhesive contains a silicate of an alkaline metal.

14. A method of preparing a plant growing medium according to claim 13, **characterised in that** the silicate of an alkaline metal used makes up 2-5% of the volume of the granules.

15. A method of preparing a plant growing medium according to claim 8, **characterised in that** the aqueous solution of the adhesive is 1-10% aqueous solution.

16. A method of preparing a plant growing medium according to claim 8, **characterised in that** the aqueous solution of the adhesive is 4% aqueous solution.

17. A method of preparing a plant growing medium according to claim 8, **characterised in that** the adhesive used makes up 5-10% of the volume of the granules.

18. A method of preparing a plant-growing medium according to claims 8-17, **characterised in that** the granules are spread as an even layer which is 2-3 cm thick and sprinkled with a 1-20% solution of the silicate of an alkaline metal after treatment with the adhesive.

19. A method of preparing a plant-growing medium according to claims 8-17, **characterised in that** the granules are placed into a form and sprinkled with a 1-20% solution of the silicate of an alkaline metal after treatment with the adhesive.

20. A method of preparing a plant growing medium according to claim 19, **characterised in that** alkaline metal silicate solution is a 4% solution.

## Patentansprüche

1. Pflanzenwachstumssubstrat auf der Basis von Polyvinylformal-Granulat, **dadurch gekennzeichnet, dass** das Polyvinylformal-Granulat als Set zusammengeklebt ist.

2. Verfahren zur Herstellung des Pflanzenwachstumssubstrat auf der Basis von Polyvinylformal, **dadurch gekennzeichnet, dass** das Reaktionsgemisch aus dem Polyvinylalkohol und Formaldehyd in erhitzten Formen acetalisiert wird, ein Füllstoff zugesetzt wird und das erhaltene Polyvinylformal-Volumenmaterial unter Druck in Granulat geschnitten, thermisch behandelt und Düngemittel, Spurenelemente und Zusatzstoffe zugesetzt werden und danach das Granulat zusammengeklebt wird.

3. Verfahren zur Herstellung des Pflanzenwachstumssubstrat nach Anspruch 2, **dadurch gekennzeichnet, dass** das Reaktionsgemisch aus Polyvinylalkohol und Formaldehyd bei 0,1-20 bar durch eine Lochplatte gepresst wird und die so entstandenen Polyvinylformal-Kügelchen bei 40-120 °C thermisch zur Herstellung von Granulat behandelt werden.

4. Verfahren zur Herstellung des Pflanzenwachstumssubstrat nach Anspruch 3, **dadurch gekennzeichnet, dass** die Polyvinylformal-Kügelchen bei 70-80 °C thermisch behandelt werden.

5. Verfahren zur Herstellung des Pflanzenwachstumssubstrat nach den Ansprüchen 2 bis 4, **dadurch gekennzeichnet, dass** das Granulat durch Imprägnierung mit Düngemitteln angereichert wird.

6. Verfahren zur Herstellung des Pflanzenwachstumssubstrat nach Anspruch 5, **dadurch gekennzeichnet, dass** die Düngemittel Stickstoff-, Kalium- und Phosphordünger sind.

7. Verfahren zur Herstellung des Pflanzenwachstumssubstrat nach den Ansprüchen 2 bis 6, **dadurch gekennzeichnet, dass** das Granulat durch Imprägnierung mit Spurenelementen angereichert wird.

8. Verfahren zur Herstellung des Pflanzenwachstumssubstrat nach den Ansprüchen 2 bis 7, **dadurch gekennzeichnet, dass** das Granulat nach der Anreicherung mit einer Düngemittelmischung mit Hilfe eines Klebstoffs zusammengeklebt wird.

9. Verfahren zur Herstellung des Pflanzenwachstumssubstrat nach Anspruch 8, **dadurch gekennzeichnet, dass** der Klebstoff eine wässrige Lösung von Polyvinylalkohol ist.

10. Verfahren zur Herstellung des Pflanzenwachstumssubstrat nach Anspruch 8, **dadurch gekennzeichnet, dass** der Klebstoff eine wässrige Lösung von Polyvinylacetat ist.

11. Verfahren zur Herstellung des Pflanzenwachstumssubstrat nach Anspruch 8, **dadurch gekennzeichnet, dass** der Klebstoff eine wässrige Lösung aus einer Mischung von Polyvinylalkohol und Polyvinylacetat ist.

12. Verfahren zur Herstellung des Pflanzenwachstumssubstrat nach den Ansprüchen 8 und 11, **dadurch gekennzeichnet, dass** der Gehalt an Polyvinylalkohol in der wässrigen Lösung der Mischung aus Polyvinylalkohol und Polyvinylacetat mindestens 5-50% beträgt.

13. Verfahren zur Herstellung des Pflanzenwachstumssubstrat nach den Ansprüchen 8 bis 12, **dadurch gekennzeichnet, dass** der Klebstoff ein Silikat eines alkalischen Metalls enthält.

14. Verfahren zur Herstellung des Pflanzenwachstumssubstrat nach Anspruch 13, **dadurch gekennzeichnet, dass** das verwendete Alkalimetallsilikat 2-5% des Volumens des Granulats ausmacht.

15. Verfahren zur Herstellung des Pflanzenwachstumssubstrat nach Anspruch 8, **dadurch gekennzeichnet, dass** die wässrige Lösung des Klebstoffs eine 1-10%ige wässrige Lösung ist.

16. Verfahren zur Herstellung des Pflanzenwachstumssubstrat nach Anspruch 8, **dadurch gekennzeichnet, dass** die wässrige Lösung des Klebstoffs eine 4%ige wässrige Lösung ist.

17. Verfahren zur Herstellung des Pflanzenwachstumssubstrat nach Anspruch 8, **dadurch gekennzeichnet, dass** der verwendete Klebstoff 5-10% des Volumens des Granulats ausmacht.

18. Verfahren zur Herstellung des Pflanzenwachstumssubstrat nach den Ansprüchen 8 bis 17, **dadurch gekennzeichnet, dass** das Granulat als gleichmäßige, 2 bis 3 cm dicke Schicht ausgebracht und mit einer 1 bis 20%igen Lösung des Silikats eines Alkalimetalls nach der Behandlung mit dem Klebstoff bestreut ist.

19. Verfahren zur Herstellung des Pflanzenwachstumssubstrat nach den Ansprüchen 8 bis 17, **dadurch gekennzeichnet, dass** das Granulat in eine Form gebracht und nach der Behandlung mit dem Kleber mit einer 1-20%igen Alkalimetallsilikatlösung bestreut wird.

20. Verfahren zur Herstellung des Pflanzenwachstumssubstrat nach Anspruch 19, **dadurch gekennzeichnet, dass** die Alkalimetallsilikatlösung eine 4%ige Lösung ist.

## Revendications

1. Substrat de croissance végétale à base de granulés de poly(formal de vinyle), **caractérisé en ce que** les granulés de poly(formal de vinyle) sont collés ensemble pour former l'agrégat.

2. Procédé de préparation d'un substrat de croissance végétale à base de poly(formal de vinyle), **caractérisé en ce que** le mélange réactionnel d'un alcool polyvinylique et de formaldéhyde est acétalisé sous forme chauffée, une charge est ajoutée, et le matériau volumétrique du poly(formal de vinyle) obtenu est découpé en granulés sous pression, traité thermiquement, et des engrais, des oligo-éléments et des additifs sont ajoutés, suivi du collage des granulés pour former l'agrégat.

3. Procédé de préparation d'un substrat de croissance végétale selon la revendication 2, **caractérisé en ce que** le mélange réactionnel d'alcool polyvinylique et de formaldéhyde est pressé à travers une plaque perforée sous l'application d'une pression de 0,1 à 20 bars, et les gouttes de poly(formal de vinyle) ainsi produites sont traitées thermiquement à une température allant de 40 à 120 °C pour l'obtention des granulés.

4. Procédé de préparation d'un substrat de croissance végétale selon la revendication 3, **caractérisé en ce que** les gouttes de poly(formal de vinyle) sont traitées thermiquement à une température allant de 70 à 80 °C.

5. Procédé de préparation d'un substrat de croissance végétale selon les revendications 2 à 4, **caractérisé en ce que** les granulés sont enrichis en engrais par imprégnation.

6. Procédé de préparation d'un substrat de croissance végétale selon la revendication 5, **caractérisé en ce que** les engrais sont des engrais azotés, potassiques, et phosphorés.

7. Procédé de préparation d'un substrat de croissance végétale selon les revendications 2 à 6, **caractérisé en ce que** les granulés sont enrichis en oligo-éléments par imprégnation.

8. Procédé de préparation d'un substrat de croissance végétale selon les revendications 2 à 7, **caractérisé en ce que** les granulés sont collés entre eux au moyen d'un adhésif après avoir été enrichis avec un mélange d'engrais.

9. Procédé de préparation d'un substrat de croissance végétale selon la revendication 8, **caractérisé en ce que** l'adhésif est une solution aqueuse d'alcool polyvinylique.

10. Procédé de préparation d'un substrat de croissance végétale selon la revendication 8, **caractérisé en ce que** l'adhésif est une solution aqueuse d'acétate de polyvinyle.

11. Procédé de préparation d'un substrat de croissance végétale selon la revendication 8, **caractérisé en ce que** l'adhésif est une solution aqueuse d'un mélange d'alcool polyvinylique et d'acétate de polyvinyle.

12. Procédé de préparation d'un substrat de croissance végétale selon les revendications 8 et 11, **caractérisé en ce que** la teneur en alcool polyvinylique dans la solution aqueuse d'un mélange d'alcool polyvinylique et d'acétate de polyvinyle est d'au moins de 5 à 50 %.

13. Procédé de préparation d'un substrat de croissance végétale selon les revendications 8 à 12, **caractérisé en ce que** l'adhésif contient un silicate d'un métal alcalin.

14. Procédé de préparation d'un substrat de croissance végétale selon la revendication 13, **caractérisé en ce que** le silicate de métal alcalin utilisé représente 2 à 5 % du volume des granulés.

15. Procédé de préparation d'un substrat de croissance végétale selon la revendication 8, **caractérisé en ce que** la solution aqueuse de l'adhésif est une solution aqueuse à 1-10 %.

16. Procédé de préparation d'un substrat de croissance végétale selon la revendication 8, **caractérisé en ce que** la solution aqueuse de l' adhésif est une solution aqueuse à 4 %.

17. Procédé de préparation d'un substrat de croissance végétale selon la revendication 8, **caractérisé en ce que** l'adhésif utilisé représente 5 à 10 % du volume des granulés.

18. Procédé de préparation d'un substrat de croissance végétale selon les revendications 8 à 17, **caractérisé en ce que** les granulés sont étalés en une couche régulière de 2 à 3 cm d'épaisseur et saupoudrés d'une solution à 1-20 % du silicate de métal alcalin après le traitement avec l'adhésif.

19. Procédé de préparation d'un substrat de croissance végétale selon les revendications 8 à 17, **caractérisé en ce que** les granulés sont placés dans un moule et saupoudrés d'une solution à 1-20 % du silicate de métal alcalin après le traitement avec l'adhésif.

20. Procédé de préparation d'un substrat de croissance végétale selon la revendication 19, **caractérisé en ce que** la solution du silicate de métal alcalin est une solution à 4 %.
